# EUROPEAN PATENT SPECIFICATION

(11) **EP 2 775 826 B1**
(45) Date of publication and mention of the grant of the patent: **16.09.2015**
(21) Application number: 12788309.8
(22) Date of filing: 02.11.2012
(51) Int. Cl.: A01K 5/01, A01K 7/00

(54) **Trough**
Trog
Auge

(30) Priority: 08.11.2011 NL 2007742; 24.05.2012 NL 2008871
(43) Date of publication of application: 17.09.2014
(73) Proprietor: Holding Krulstaart B.V., 8731 CG Wommels (NL)
(72) Inventor: WIT, Bernardus Johannes, NL-8731 CG Wommels (NL)
(74) Representative: Lubberdink, Pim
(86) International application number: PCT/NL2012/050772
(87) International publication number: WO 2013/070066

(56) References cited:
- WO-A1-99/05905
- DE-U1- 8 905 992
- FR-A1- 2 957 485
- US-A- 3 921 587

## Description

The invention relates to a trough, such as a water trough and particularly a feed trough, for feeding animals, in particular for supplementary feeding of young animals such as piglets or calves, see e.g. documents US-A-3921587, WO-A-99/05905 and FR-A-2957485.

A known problem with known troughs is that the animals spill feed, such as dry feed or mash. The accommodation area hereby becomes dirty in the vicinity of the trough. This is undesirable from a hygiene viewpoint. Known in practice for the purpose of limiting spillage are feed troughs comprising an upright wall part, the outer end of which is substantially vertical or curved inward. An animal is hereby not able, or only able to a limited extent, to manouevre the feed out of the feed trough and thereby spill it.

The upright wall part in the known feed troughs does however cause the problem that the feed trough itself is difficult to clean. This still results in an unhygienic situation. Cleaning of the feed trough is moreover labourious. It is also difficult in the case of water troughs with such an upright wall part to remove dirt which accumulates in the trough. This has the further drawback that animals do not eat the feed if the trough is soiled.

An object of the invention is to obviate this problem and to provide a trough which prevents spilling and is easy to clean.

This object is achieved with the trough for supplementary feeding of animals according to claim 1.

Because the outer end of the upright wall part is curved inward or is substantially vertical, spillage of feed by animals is prevented. Feed residues can moreover be discharged via the slope, for instance by washing down the feed residues over the slope with a water spray or brushing them out of the trough. In other words, the trough comprises a slope for discharge of feed residues from the trough in the direction in which the slope rises. The slope is embodied such that during cleaning of the trough the feed residues leave the trough during use via the highest part of the slope.

An advantage of providing the slope is that the trough can hereby be substantially wholly emptied through discharge of feed residues over the slope, for instance by means of spraying or brushing.

The wall part with curved or vertical outer end is adapted such that spillage of feed is prevented irrespective of the position along the periphery of the trough.

With the trough according to the invention the feed residues can be discharged in controlled manner and are not spread here through the accommodation in uncontrolled manner, which would result in unhygienic conditions.

A substantially vertical outer end of the upright wall part is understood to mean that the angle between a surface which is horizontal during use, for instance the ground surface on which the trough rests during use, and the outer end amounts to substantially about 90°. An inward curved outer end is understood to mean a situation in which the outer end of the upright wall is directed toward the inside of the trough. In this case the angle between a horizontal surface, such as the ground surface, and the outer end is less than 90° as measured on the inside of the trough. The angle is for instance only a few degrees smaller than 90°, for instance 89°. This has the advantage that, in the case of production by injection moulding, the trough can be easily released from the mould. The angle is preferably about 0°, for instance 5° or even -5°. In other words, the outer end of the curved wall part is preferably roughly horizontal during use. If the production method of the trough allows such an angle, this is recommended. This is because spilling of feed is prevented more effectively using such small angles than when larger angles are used.

In an embodiment the upright wall comprises for instance on its outer end a curve directed toward the inside of the trough, or alternatively the outer end forms an acute angle with the rest of the upright wall. The upright wall is for instance substantially horizontal at an outer end.

Trough is understood to mean both a feed trough and water trough. In the case of a water trough, feed residues are understood to mean water residues. The invention does however preferably relate to a feed trough.

The wall part preferably forms a wall which runs round the whole bottom periphery. Alternatively, the wall part surrounds a part of the bottom periphery, for instance only the front side and rear side.

The slope extends for instance above the wall part such that feed residues can be discharged from the trough via the slope and over the wall part.

At its upper outer end, i.e. the outer end along which feed residues leave the trough during cleaning, the width of the slope is preferably less than 50% of the length of the edge of the vertical or inward curved outer end of the upright wall part, more preferably less than 25%, still more preferably less than 20%, still more preferably less than 15% and most preferably less than 10%. In other words, the upper edge of the trough is preferably largely or wholly vertical or curved inward.

The slope preferably connects to the bottom. This prevents a residual portion being left behind on the bottom of the trough.

In an advantageous embodiment the slope begins close to the bottom of the trough and preferably runs upward up to or close to the upper edge of the trough. During cleaning the cleaning liquid and/or cleaning air is pushed upward with the feed residues over the slope so that the feed residues can be removed from the trough.

The wall part comprises a recess or opening to which the slope connects. The feed residues are discharged via the recess or opening instead of over the wall part. The recess or opening is situated at a height and/or of dimensions such that animals cannot press the feed through this opening or recess during use, or hardly so.

'Opening' is in this respect understood to mean an opening with continuous peripheral edge, such as a hole, in contrast to 'recess', which comprises an interrupted peripheral edge such as a gap.

An additional advantage of an opening compared to a recess is that the wall part can be given a continuous form. The whole upper edge of the trough can in this case be given a vertical or curved inward form. Spilling is prevented still further with such a continuous wall part. Possible edges or corners are also avoided as far as possible.

In a preferred embodiment the slope lies in its longitudinal direction largely or wholly against the wall part.

The longitudinal direction is the direction in which the slope rises. Because the slope lies against the wall part, feed residues can be pushed upward along the wall of the slope, for instance by means of spraying water. The trough is hereby easy to clean.

The trough is preferably embodied such that during use animals can reach feed in the trough along substantially the whole peripheral edge of the trough.

In a further preferred embodiment the trough has a round or oval periphery.

The round or oval periphery will cause a kind of cyclone in the trough during spraying of water for the purpose of removing feed residues. The water follows the periphery of the trough bounded by the wall part and will leave the trough via the slope which lies against the wall part.

In a further preferred embodiment the wall part has a spiral shape in its longitudinal direction.

A trough is in this way obtained with a type of volute form. When water is sprayed into the trough it will follow the spiral-shaped wall part, whereby a cyclone is formed which removes the feed residues from the trough via the slope. The trough is hereby easy to clean.

In a possible embodiment the wall part resembles the spiral shape or at least a part of the spiral shape. The slope is hereby wholly or partially integrated with the wall part. This simplifies production. In addition, the number of edges and corners is reduced so that fewer residues remain in the trough.

In an alternative embodiment according to the invention the bottom of the trough forms the slope for the discharge of feed residues. An integrated trough is hereby also obtained. The trough is preferably provided substantially as one unit, wherein the slope is formed wholly or partially by the bottom and/or the wall part.

A first part of the bottom is for instance surrounded by a wall part, the outer end of which is substantially vertical or curved, and a second part of the bottom forms the slope.

In a preferred embodiment the slope comprises a gutter. By providing a gutter, feed, and particularly residue, is guided in effective manner from the trough. This is particularly advantageous when feed residues are sprayed out of the trough using water.

In a preferred embodiment the outer end of the wall part is curved and this outer end forms the slope.

This has the advantage of resulting in a simple construction, wherein the slope is provided by means of a relatively simple operation. The trough for instance comprises an upright wall with inward curved edge which surrounds the bottom, wherein a part of the wall comprises a curved edge which extends further relative to the rest of the wall such that it touches the bottom.

In a preferred embodiment the trough according to the invention comprises a marking for the purpose of indicating the direction in which liquid, such as water, can be sprayed into the trough in order to discharge feed residues via the slope.

The trough is in this way easy to clean. This is particularly advantageous when the trough takes an asymmetrical form so that a preferred direction is created for spraying in of water for the purpose of removing feed residues.

The marking indicates for instance the location of the slope in the trough. The slope has for instance a different colour than the rest of the trough, or the location of the slope is indicated on the wall of the trough. In another embodiment the location is indicated at which water should be sprayed into the trough so as to form a cyclone.

In a preferred embodiment the trough according to the invention comprises a means for locking the trough against rotation during use.

The presence of the locking prevents rotation of the trough when for instance a cleaning liquid is sprayed into the trough with great force. The locking preferably comprises a protrusion for placing in a grating in an animal accommodation. This protrusion is preferably situated on the underside of the trough. Alternatively or additionally, the locking comprises a fixing means such as a hook or screw.

In a preferred embodiment the trough comprises a deflecting means for guiding in a predetermined direction feed residues leaving the trough via the slope.

The deflecting means achieves that the feed residues leave the trough in the desired direction. This prevents the feed residues spreading over a large area outside the trough. The deflecting means is for instance arranged close to the highest point of the slope and/or at an opening or recess where the feed residues leave the trough during cleaning. The deflecting means comprise for instance a protrusion such as a partition or roof. Alternatively or additionally, the deflecting means can comprise a hose or tube in order to thus discharge the feed residues to a desired location. The tube or hose in this case forms a discharge channel.

The deflecting means is preferably adapted to guide the feed residues downward. Feed residues are thus guided in the direction of the accommodation floor. Floors of animal accommodation usually comprise gratings for discharge of dirt through which the feed residues are also discharged in simple manner.

There is also provided a device for cleaning a trough as described above, comprising an electrical drive and at least one brush rotatable around a shaft by the drive.

This device has the same advantages and effects as described above for the trough.

The rotatable brush is preferably pivotable between a first position, in which the brush extends perpendicularly of the shaft over a first distance, and a second position in which the brush extends perpendicularly of the shaft over a second distance which is greater than the first distance.

In the first position the device is folded in, whereby the brush can be introduced into the trough. By then being folded out to the second position, the brush is carried under a possible edge of the trough.

In a further preferred embodiment, which can also be provided without the pivotable brush, the device comprises at least two brushes rotatable around the shaft by the drive, a first brush of which is equipped with rigid bristles for scrubbing the trough and a second brush of which is equipped with flexible bristles for displacing feed residues.

The combination of a brush with flexible bristles and a brush with stiff bristles makes the device suitable for scrubbing the trough as well as for displacing the feed residues and/or flushing water, i.e. brushing them out of the trough.

The device comprises for instance two brushes with stiff bristles and two brushes with flexible bristles.

The device is preferably embodied such that it can be placed over a centrally arranged, vertical projection of the trough. The shaft of the device for instance takes an at least partially hollow form. By placing the hollow shaft over a centrally arranged vertical projection of the trough the device is correctly positioned for cleaning of the trough. The brush is moreover prevented from displacing during cleaning. This enables a simple and rapid cleaning of the trough.

The invention further relates to the use of the trough as described above and a method for feeding animals.

This use and this method have the same advantages and effects as described above for the trough.

The method according to the invention comprises of providing a trough as described above.

Providing the trough for instance comprises of producing the trough. Production for instance comprises of rotation moulding or injection moulding of plastic or manufacturing the trough from stainless steel. The trough is preferably manufactured as a unit.

In a preferred embodiment according to the invention the method comprises of cleaning the trough. The cleaning preferably comprises of using a brush rotatable by a drive. This is particularly advantageous when the trough has a round or oval periphery, particularly when the wall part has a spiral shape in its longitudinal direction. The feed residues are carried out of the trough, for instance with cleaning agent such as water, by means of a rotating movement of the rotating brush.

Use is preferably made of the brushing device as described in the above.

It is preferably possible to switch between a first rotation direction of the brush and a second, opposed rotation direction of the brush. This has the advantage in the case of a round or oval trough that the feed residues are moved out of the trough in the first rotation direction, while the feed residues are scrubbed loose of the trough in the second rotation direction. The feed residues are preferably first scrubbed loose by using the first rotation direction, after which the scrubbed-off feed residues are removed from the trough by using the second rotation direction.

The method preferably comprises of providing a rotatably driven brush provided with a feed for cleaning agent such as water. Such brushes are per se known.

Further advantages, features and details of the invention are elucidated on the basis of preferred embodiments thereof, wherein reference is made to the accompanying figures. Herein:
- figure 1 shows a prior art feed trough;
- figure 2 shows a cross-section of the feed trough of figure 1;
- figure 3 shows a first embodiment of a feed trough according to the invention;
- figure 4 shows a top view of the embodiment of figure 3;
- figures 5A-B show a second embodiment of a feed trough according to the invention;
- figure 6 shows a component of a third embodiment of a feed trough according to the invention;
- figure 7 shows a detail as according to arrow VII in figure 6;
- figure 8 shows a fourth embodiment of a feed trough according to the invention;
- figure 9 shows a cross-section of the feed trough of figure 8 as seen along arrow IX;
- figure 10 shows a variant of the trough of figure 3;
- figure 11 shows a variant of the trough of figures 8 and 9;
- figure 12 shows a view as according to arrow XII in figure 10;
- figures 13a-13b show top views of the embodiment of figures 3 and 4 with brush for cleaning of the trough by way of illustrating the method according to the invention;
- figure 14 shows a view of a trough according to a further embodiment according to the invention;
- figure 15 shows a bottom view of the trough of figure 14; and
- figure 16 shows a brushing device according to the invention with a trough according to figures 14 and 15.

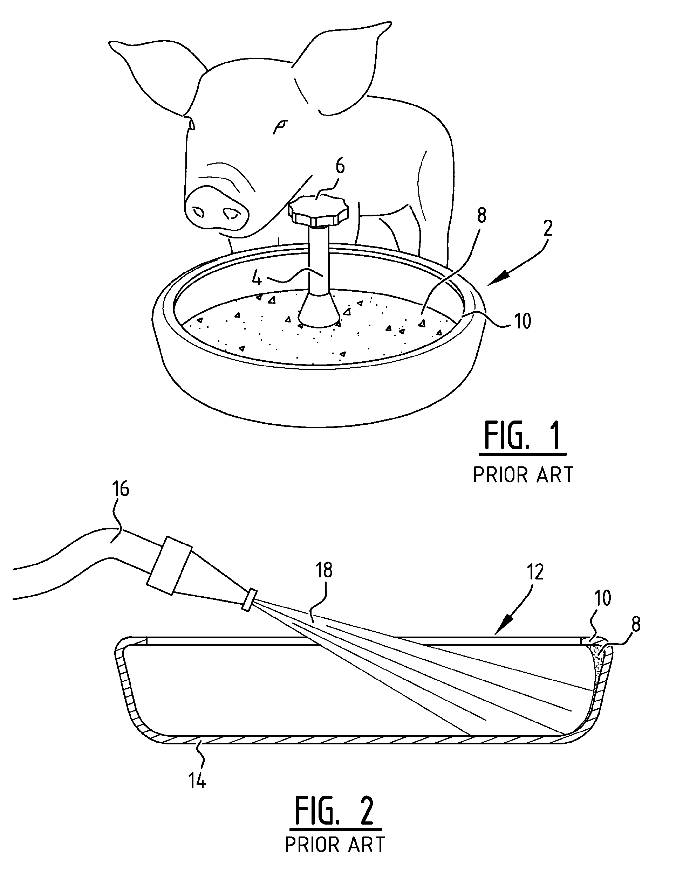

The prior art feed trough 2 (figures 1 and 2) comprises a fastening 4 with star grip 6 for the purpose of fastening the trough 2 to the floor of the accommodation. Trough 2 contains feed residues 8 and is provided with a wall 10 which is curved at its edge and forms an opening 12 through which an animal can reach the feed 8. Trough 2 comprises a bottom 14. When attempts are made to clean trough 2 by means of a water sprayer 16, the water 18 will be unable to move the feed residues 8 out of wall 10 because of the curved edge. This is shown in figure 2.

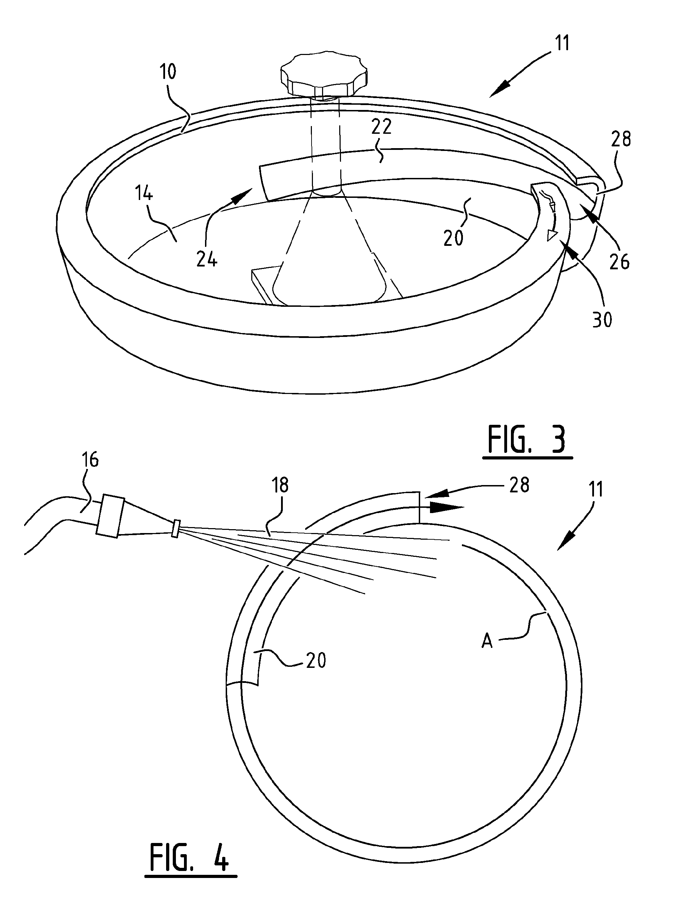

In a first embodiment (figures 3 and 4) trough 11 comprises a slope 20 provided with a gutter 22. Slope 20 connects at its lower outer end 24 to wall 10. Wall 10 of trough 11 has a spiral shape. At the upper outer end 26 of slope 20 a recess 28 is provided in the wall. When water is sprayed into the trough it will be guided along the wall as according to arrow A so that a kind of cyclone is formed with which the feed residues are removed from the trough. A marking 30 is arranged on the wall to indicate the correct spraying direction.

Optionally present on the underside of the trough is a protrusion (not shown in the figure) for placing in a grating so that rotation around the central star grip is prevented, for instance during cleaning.

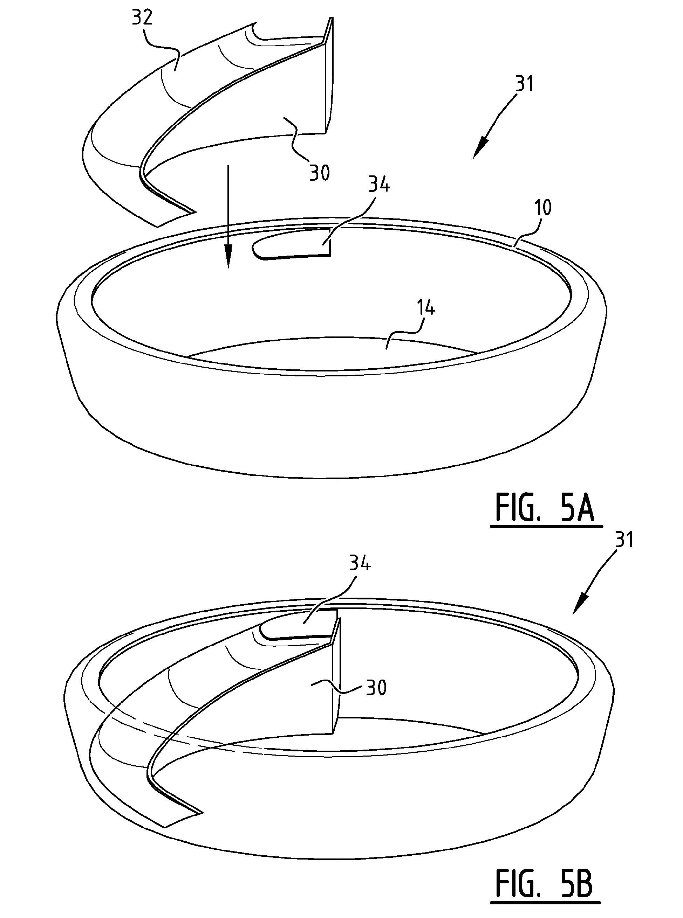

In a second embodiment (figures 5A-B) the slope 30 of trough 31 is provided as an insert with a gutter 32 which connects to recess 34 in wall 10. Insert 30 can also be used in existing troughs.

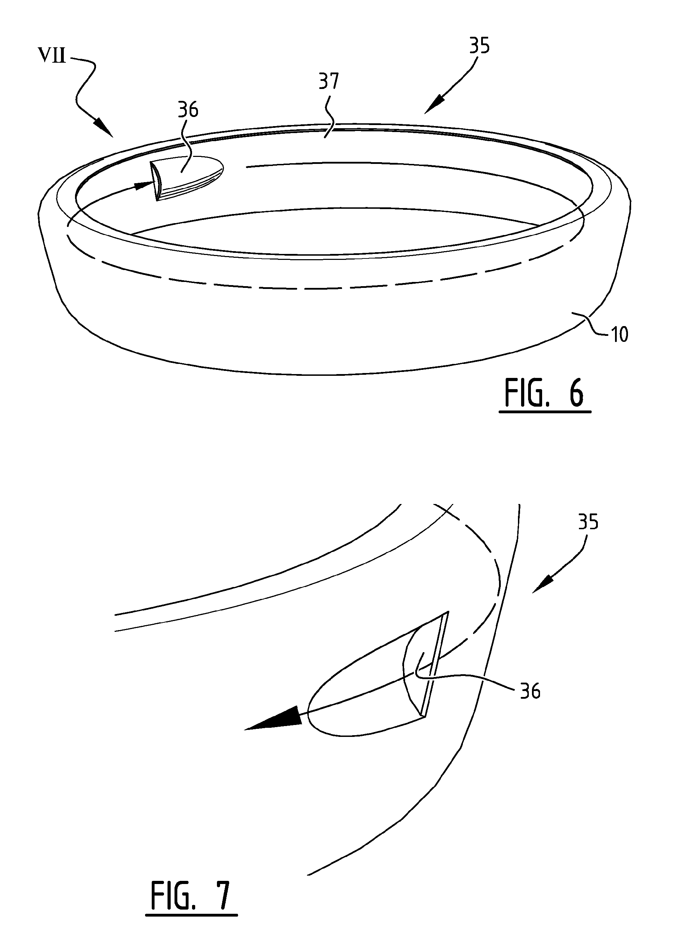

In a third embodiment recess 36 is formed in trough 35 as shown in figures 6 and 7. Recess 36 is manufactured by making an incision in a wall 37 forming a slope, and then pressing the wall partially inward.

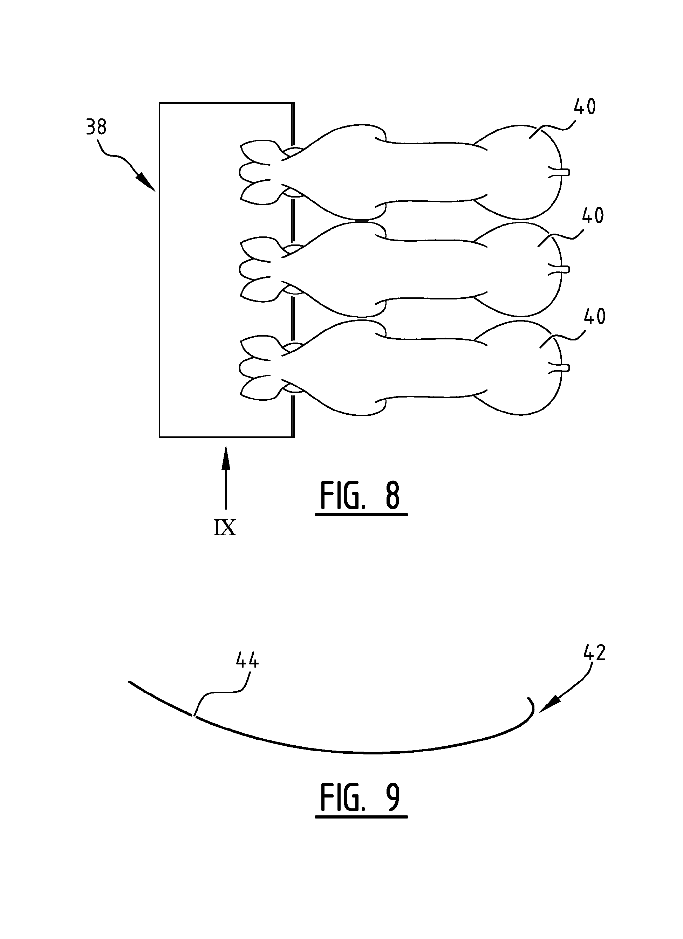

In a fourth embodiment trough 38 (figures 8 and 9) has a rectangular shape. On the side of piglets 40 trough 38 has a wall with a curved edge 42 and on the opposite side the bottom forms a slope 44 for discharge of feed residues.

Trough 38 is filled with feed for piglets 40. After a time the trough 38 is cleaned with water. The water with residues is discharged here via slope 44.

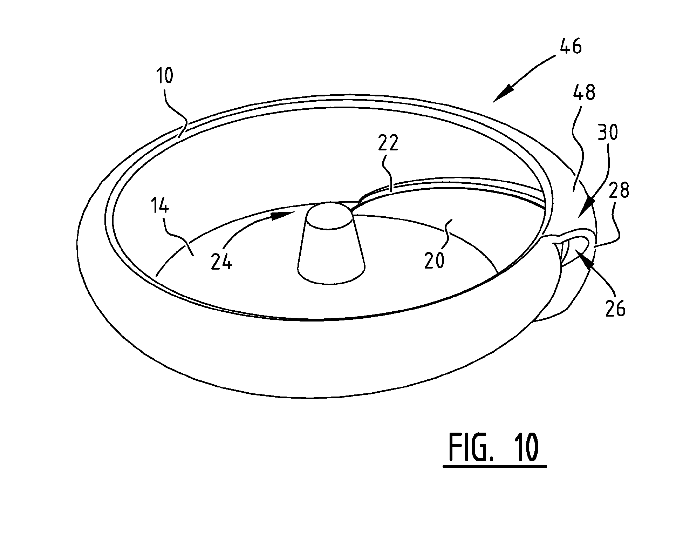

Trough 46 (figure 10) is a variant of trough 11 of figure 3. The same reference numerals are used for similar elements. Trough 46 differs from trough 11 in that its whole peripheral edge 48 is closed. An opening 28 is hereby formed instead of a recess as in figure 3. This has the advantage that the trough is stronger, and spilling by animals is moreover prevented still further.

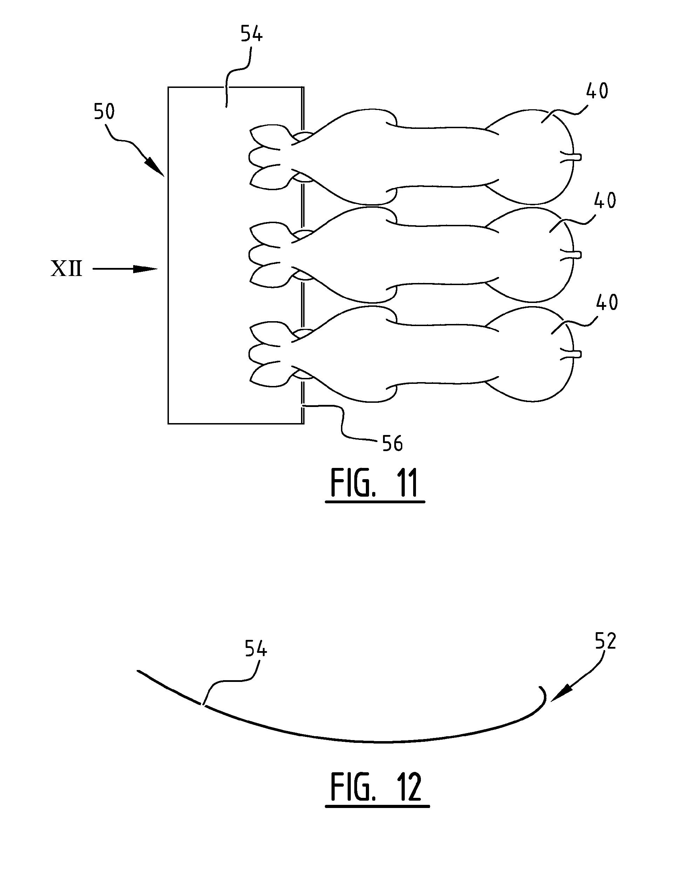

Trough 50 (figure 11) is a variant of trough 38 of figures 8 and 9. The trough has on its first side 52 an inward curved edge (figure 12). The bottom of trough 50 forms a slope. Feed residues are sprayed from side 52 in the direction of side 54 during cleaning. Sides 56 and 58 are preferably both directed inward or vertically so that spillage is prevented. Alternatively, a part of the edge on side 54 can also be curved. In another embodiment two slopes are provided, on side 54 and on the side of edge 52. In this case the edges of these sides are preferably curved partially inward or are vertical.

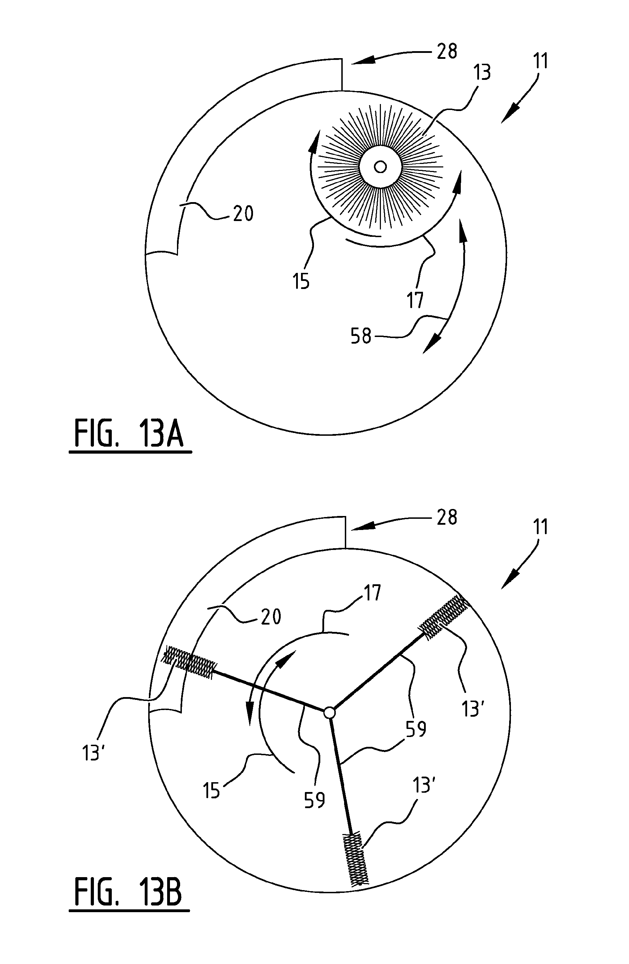

Troughs according to the invention are preferably cleaned with a rotating brush 13, 13' (figures 13a, 13b). In a first embodiment brush 13 (figure 13a) is connected to a drive and brush 13 can rotate in a first direction 15 and a second direction 17. Brush 13 is optionally provided with a water feed (not shown) so that water can be introduced into trough 11.

Caked-on feed residues are scrubbed loose from trough 11 by moving brush 13 in direction 17. In this case the rotation direction is opposed to the direction in which slope 20 rises. The water and the feed residues will hereby not yet be removed from trough 11 during scrubbing, or hardly so. This saves water.

For the purpose of removing feed residues from trough 11 the brush is then rotated in direction 15. A kind of cyclone is hereby formed in trough 11, and the water and the feed residues are carried out of trough 11 via slope 20.

Use is preferably made of a brush as shown in figure 13b. This brush comprises three arms 59. More or fewer arms can alternatively be provided. Arms 59 are provided with brush heads 13'. These brush heads can for instance extend over the whole length of arms 59 or over a part thereof. The brush of figure 13b is placed with its rotation shaft roughly in the centre of trough 11. As in figure 13a, the brush of figure 13b is rotatable by means of a drive, wherein the rotation direction can be switched between direction 15 and direction 17 for the purpose of respectively removing feed residues and scrubbing. The dimensions of arms 59 are chosen such that the brush covers roughly the whole surface of trough 11. The water and the feed residues are hereby pumped with force out of trough 11. A water feed is also possible in the brush according to figure 13b.

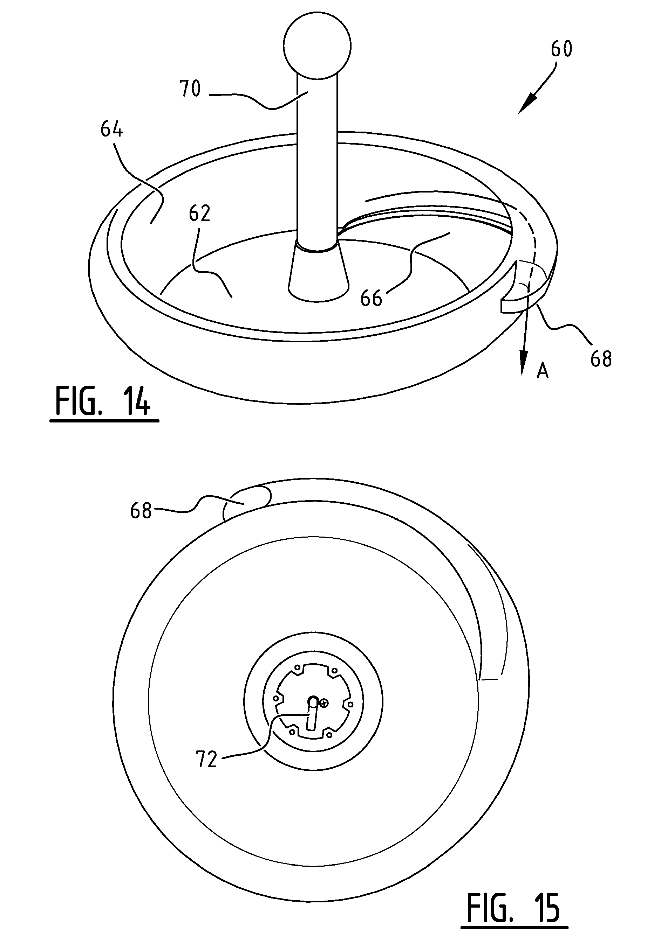

Trough 60 (figures 14, 15) comprises bottom 62 with upright wall 64 which is directed inward at its upper outer end so that spillage of feed by animals is prevented. Trough 60 also comprises a slope 66 and an opening 68 in wall 64. Opening 68 is directed downward so that feed residues discharged via slope 66 leave trough 60 in substantially downward direction, as indicated with arrow A. Slope 66 forms together with wall 64 a type of gutter through which feed residues, optionally with flushing liquid, can be carried in the direction of opening 68, via which opening 68 the feed residues leave the trough. Wall 64 forms here a kind of roof above opening 68 and therefore serves as deflecting means.

Trough 60 also comprises a handle 70 and a hook 72 connected thereto for fixing trough 60 to a grating. Trough 60 further comprises a protrusion on the underside for the purpose of preventing rotation of the trough (not shown).

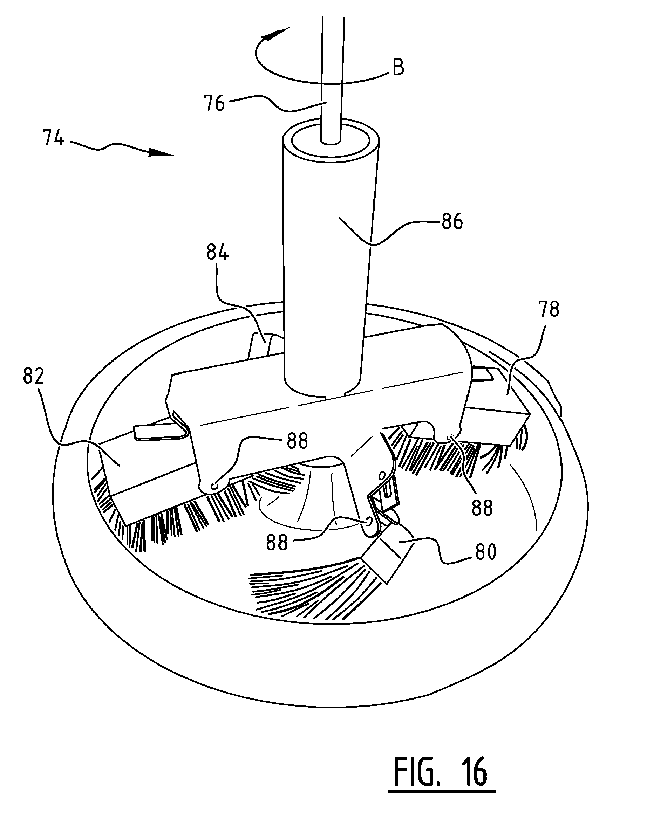

Brushing device 74 (figure 16) comprises a drive (not shown) connected to shaft 76 for the purpose of rotating the shaft 76. Shaft 76 is connected to brushes 78, 80, 82, 84. Two brushes 78, 82 are equipped with stiff bristles and two brushes 80, 84 are equipped with flexible bristles.

Shaft 76 comprises a hollow part 86 so that, as shown, it can be placed around handle 70 of trough 60.

Brushes 78, 80, 82, 84 are connected pivotally to shaft 76 by means of pivot points 88.

Cleaning of trough 60 with brushing device 74 takes place for instance as follows. Water is introduced into trough 60. Device 74 is placed with shaft 76 around handle 70 of trough 60. Brushes 78, 80, 82, 84 are then rotated around shaft 76 in direction B. The feed residues are scrubbed loose here, wherein brushes 78, 82 with stiff bristles are particularly effective in scrubbing off the feed residues. Brushes 78, 80, 82, 84 are then rotated in the opposite direction in order to pump the water with feed residues out of the trough, wherein brushes 80, 84 with flexible bristles are particularly effective for pumping the water with the feed residues out of the trough.

In this embodiment the brushing device also optionally comprises a water feed.

The trough according to the invention is for instance manufactured by rotation moulding or injection moulding of plastic to the desired shape. The trough can also be manufactured from a different material, such as stainless steel. Following manufacture, the trough is placed in the animal accommodation.

The invention is by no means limited to the above described preferred embodiments thereof. The rights sought are defined by the following claims, within the scope of which many modifications can be envisaged. It is thus expressly possible to apply measures from a shown embodiment in another embodiment and thereby realize a new combination according to the invention.

## Claims

1. Trough (11, 31, 46, 60) for feeding animals, comprising:
- a bottom (14, 62) with an upright wall part (10, 64) which is substantially vertical and/or curved inward at an outer end such that spillage of feed by animals is prevented; and
- a slope (20, 30, 66) for discharge of feed residues from the trough over the slope, wherein the slope is embodied such that during cleaning of the through the feed residues leave the trough during use via the highest part of the slope, wherein the wall part comprises a recess (26) or opening (34, 36, 28) to which the slope connects for discharge via the recess or opening of feed residues, wherein the recess or opening is provided in the wall at the upper outer end of the slope.

2. Trough as claimed in claim 1, wherein the slope lies in its longitudinal direction largely or wholly against the wall part.

3. Trough as claimed in claim 2, wherein the trough has a round or oval periphery.

4. Trough as claimed in claim 3, wherein the wall part has a spiral shape in its longitudinal direction.

5. Trough as claimed in at least one of the claims 1-4, wherein the bottom forms the slope.

6. Trough as claimed in at least one of the claims 1-5, wherein the slope comprises a gutter (22).

7. Trough as claimed in at least one of the claims 1-6, wherein the outer end of the wall part is curved such that it forms the slope.

8. Trough as claimed in at least one of the claims 1-7, provided with a marking (30) for the purpose of indicating the direction in which liquid can be sprayed into the trough in order to discharge feed residues via the slope.

9. Trough as claimed in at least one of the claims 1-8, comprising a means (70, 72) for locking the trough against rotation during use.

10. Trough as claimed in any of the foregoing claims, comprising a deflecting means for guiding in a predetermined direction feed residues leaving the trough via the slope.

11. Use of a trough as claimed in any of the claims 1-10 for feeding animals.

12. Method for feeding animals, comprising of providing a trough as claimed in at least one of the claims 1-10.

13. Method according to claim 12, comprising of cleaning the trough with a brush (13, 13', 78, 80, 82, 84) rotatable by means of a drive.

## Patentansprüche

1. Trog (11, 31, 46, 60) zum Füttern von Tieren, aufweisend:
- einen Boden (14, 62) mit einem aufrechten Wandteil (10, 64), welcher im Wesentlichen vertikal und/oder an einem äußeren Ende einwärts gekrümmt ist, so dass ein Verschütten von Futter durch Tiere vermieden wird,
- eine Schräge (20, 30, 66) zum Auslassen von Futterresten aus dem Trog über die Schräge, wobei die Schräge derart ausgeführt ist, dass während des Reinigens des Trogs die Futterreste den Trog während der Handhabung verlassen über den höchsten Teil der Schräge, wobei der Wandteil eine Aussparung (26) oder eine Öffnung (34, 36, 28) aufweist, mit welcher die Schräge verbunden ist zum Auslassen der Futterreste über die Aussparung oder die Öffnung, wobei die Aussparung oder die Öffnung in der Wand an dem oberen äußeren Ende der Schräge bereitgestellt ist.

2. Trog wie in Anspruch 1 beansprucht, wobei die Schräge in ihrer Längsrichtung größtenteils oder gänzlich gegen den Wandteil anliegt.

3. Trog wie in Anspruch 2 beansprucht, wobei der Trog eine runde oder ovale Peripherie hat.

4. Trog wie in Anspruch 3 beansprucht, wobei der Wandteil in seiner Längsrichtung eine Spiralgestalt hat.

5. Trog wie in wenigstens einem der Ansprüche 1-4 beansprucht, wobei der Boden die Schräge bildet.

6. Trog wie in wenigstens einem der Ansprüche 1-5 beansprucht, wobei die Schräge eine Rinne (22) aufweist.

7. Trog wie in wenigstens einem der Ansprüche 1-6 beansprucht, wobei das äußere Ende des Wandteils derart gekrümmt ist, dass er die Schräge bildet.

8. Trog wie in wenigstens einem der Ansprüche 1-7 beansprucht, bereitgestellt mit einer Markierung (30) für den Zweck des Anzeigens der Richtung, in welche Flüssigkeit in den Trog gespritzt werden kann, um die Futterreste über die Schräge auszulassen.

9. Trog wie in wenigstens einem der Ansprüche 1-8 beansprucht, aufweisend ein Mittel (70, 72) zum Sperren des Trogs gegen Rotation während der Handhabung.

10. Trog wie in irgendeinem der vorhergehenden Ansprüche beansprucht, aufweisend ein Ablenkungsmittel zum Führen der Futterreste, die den Trog über die Schräge verlassen, in eine vorbestimmte Richtung.

11. Verwendung eines Trogs wie in irgendeinem der Ansprüche 1-10 beansprucht zum Füttern von Tieren.

12. Verfahren zum Füttern von Tieren, aufweisend Bereitstellen eines Trogs wie in wenigstens einem der Anspruch 1-10 beansprucht.

13. Verfahren gemäß Anspruch 12, aufweisend Reinigen des Trogs mit einer Bürste (13, 13', 78, 80, 82, 84), die mittels eines Antriebs drehbar ist.

## Revendications

1. Auge (11, 31, 46, 60) destinée à nourrir des animaux, comprenant :
- un fond (14, 62) qui présente une partie paroi droite (10, 64) qui est sensiblement verticale et/ou incurvée vers l'intérieur au niveau d'une extrémité extérieure de façon à empêcher un renversement de la nourriture par les animaux ; et
- une pente (20, 30, 66) destinée à évacuer de l'auge les résidus de nourriture sur la pente, dans laquelle la pente est incorporée de telle sorte que les résidus de nourriture, au cours du nettoyage de l'auge, sortent de l'auge, lors de l'utilisation, par l'intermédiaire de la partie la plus élevée de la pente, dans laquelle la partie paroi comprend un renfoncement (26) ou une ouverture (34, 36, 28) auquel est connectée la pente pour une évacuation des résidus de nourriture par l'intermédiaire du renfoncement ou de l'ouverture, dans laquelle le renfoncement ou l'ouverture est prévu dans la paroi au niveau de l'extrémité extérieure supérieure de la pente.

2. Auge selon la revendication 1, dans laquelle la pente se situe dans sa direction longitudinale, en grande partie ou complètement, contre la partie paroi.

3. Auge selon la revendication 2, dans laquelle l'auge présente une périphérie ronde ou ovale.

4. Auge selon la revendication 3, dans laquelle la partie paroi présente une forme en spirale dans sa direction longitudinale.

5. Auge selon l'une quelconque des revendications 1 à 4, dans laquelle le fond forme la pente.

6. Auge selon l'une quelconque des revendications 1 à 5, dans laquelle la pente comprend une rigole (22).

7. Auge selon l'une quelconque des revendications 1 à 6, dans laquelle l'extrémité extérieure de la partie paroi est incurvée de telle sorte qu'elle forme la pente.

8. Auge selon l'une quelconque des revendications 1 à 7, dotée d'une inscription (30) destinée à indiquer la direction dans laquelle un liquide peut être projeté dans l'auge de façon à évacuer les résidus de nourriture par l'intermédiaire de la pente.

9. Auge selon l'une quelconque des revendications 1 à 8, comprenant des moyens (70, 72) destinés à empêcher l'auge de tourner en cours d'utilisation.

10. Auge selon l'une quelconque des revendications précédentes, comprenant des moyens de déviation destinés à guider les résidus de nourriture dans une direction prédéterminée quand ils sortent de l'auge par l'intermédiaire de la pente.

11. Utilisation d'une auge selon l'une quelconque des revendications 1 à 10, destinée à nourrir des animaux.

12. Procédé destiné à nourrir des animaux, comprenant la fourniture d'une auge selon l'une quelconque des revendications 1 à 10.

13. Procédé selon la revendication 12, comprenant le nettoyage de l'auge avec une brosse (13, 13', 78, 80, 82, 84) qui peut tourner au moyen d'un entraînement.
